# EUROPÄISCHE PATENTANMELDUNG

(11) **EP 2 037 096 A2**
(43) Veröffentlichungstag der Anmeldung: **18.03.2009**
(21) Anmeldenummer: 08015759.7
(22) Anmeldetag: 08.09.2008
(51) Int. Cl.: F01P 7/16, F01P 11/16

(54) **Kühlmittelkreislauf zur Regelung der Temperatur einer Kühlflüssigkeit und Kraftfahrzeug damit**

(30) Priorität: 17.09.2007 DE 102007044385
(71) Anmelder: Sitronic Ges. für elektrotechnische Ausrüstung mbH & Co. KG, 71116 Gärtringen (DE)
(72) Erfinder: Doll, Wolfgang, 70771 Leinfelden-Echterdingen (DE); Gebhard, Christian, 91717 Wassertrüdingen (DE); Habermeyer, Stefan, 91719 Heidenheim-Hohentrüdingen (DE); Hösch, Luitpold, 90579 Langenzenn (DE); Zametzky, Klaus, 91126 Schwabach (DE)
(74) Vertreter: Kohler Schmid Möbus

(57) **Zusammenfassung**

Die Erfindung betrifft einen Kühlmittelkreislauf (5, 6, 7, 7a, 8, 8a), bevorzugt für das Kühlen eines Antriebs oder Motors (2) eines Kraftfahrzeugs (1), insbesondere eines Pkws, umfassend: einen Regler (8), der zur Regelung der Temperatur einer Kühlflüssigkeit (7a) einen elektrisch betriebenen Gebläsemotor (5) ansteuert. Der Regler (8) steht für seine Kühlung in thermischem Kontakt mit der Kühlflüssigkeit (7a) und ist ausgebildet, über einen bevorzugt am Regler (8) vorgesehenen Temperatursensor (8a) die Temperatur der Kühlflüssigkeit (7a) zu erfassen. Hierdurch kann eine definierte Temperatur der Kühlflüssigkeit (7a) eingestellt werden, ohne dass hierzu ein Steuersignal aus einer übergeordneten Steuer- bzw. Regeleinrichtung benötigt wird.

## Beschreibung

Die Erfindung betrifft einen Kühlmittelkreislauf bevorzugt für das Kühlen eines Antriebs oder Motors eines Kraftfahrzeugs, insbesondere eines Pkws, umfassend: einen Regler, der zur Regelung der Temperatur einer Kühlflüssigkeit einen elektrisch betriebenen Gebläsemotor ansteuert, welcher zur Entwärmung der Kühlflüssigkeit dient. Der Regler gibt hierbei die Spannung des Gebläsemotors vor. Der Gebläsemotor des Kühlmittelkreislaufs wird bei laufendem Motor entweder elektrisch oder mechanisch angetrieben. Beim Abstellen des Motors gibt es im Regelfall bei entsprechender Motortemperatur einen Nachlauf des dann elektrisch betriebenen Gebläsemotors. Es ist üblich, in einem solchen Kühlmittelkreislauf Wasser als Kühlflüssigkeit einzusetzen. Es versteht sich, dass ein solcher Kühlmittelkreislauf nicht nur zur Kühlung eines (Verbrennungs-)Motors, sondern auch zur Kühlung anderer Antriebe, z.B. zur Kühlung von Brennstoffzellen, eingesetzt werden kann.

Das Gebläse besitzt einen Elektromotor, dessen Leistung meist stufenweise regelbar ist. In der Praxis erfolgt die Leistungsregelung mit parallelen oder seriellen Schaltern oder Relais. Bei Fahrzeugen der Oberklasse kennt man auch eine stufenlose Regelung mit Reglern auf Basis der Pulsweitenmodulation, den so genannten PWM-Reglern. Die PWM-Regler funktionieren demgemäß im Motorraum mit seinen häufig recht hohen Temperaturen.

Es ist bekannt, in dem Kühlmittelkreislauf einen Temperatursensor zur Bestimmung der Temperatur der Kühlflüssigkeit vorzusehen, welcher mit einer Steuereinheit außerhalb des Kühlmittelkreislaufs verbunden ist. Die Steuereinheit wertet das Signal des Temperatursensors aus und gibt eine Information über die Kühlmitteltemperatur an den Regler weiter. Zur Verbindung der Steuereinheit mit dem Regler bzw. dem Temperatursensor ist ein nicht unerheblicher Aufwand an Verkabelung notwendig.

Es ist die Aufgabe der Erfindung einen Kühlmittelkreislauf, ein Kraftfahrzeug mit einem solchen Kühlmittelkreislauf, eine Kühlmittelleitung, einen Kühler und ein CRFM-Modul mit einem solchen Kühler bereitzustellen, welche eine einfache und kostengünstige Regelung der Temperatur der Kühlflüssigkeit und damit der Temperatur einer zu kühlenden Einrichtung, z.B. eines Verbrennungsmotors, ermöglichen.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Gemäß einem Aspekt wird die Aufgabe gelöst durch einen Kühlmittelkreislauf der eingangs genannten Art, bei welcher der Regler für seine Kühlung in thermischem Kontakt mit der Kühlflüssigkeit steht, und bei welcher der Regler ausgebildet ist, mittels eines bevorzugt am Regler vorgesehenen Temperatursensors die Temperatur der Kühlflüssigkeit zu erfassen. Der Regler vergleicht die erfasste (Ist-)Temperatur mit einer Soll-Temperatur des Kühlwassers und steuert den Gebläsemotor an, um die Temperatur des Kühlwassers auf die Soll-Temperatur zu regeln bzw. diese nach oben zu begrenzen.

Mit einem solchen Kühlmittelkreislauf lässt sich die Temperatur der Kühlflüssigkeit unabhängig von einer übergeordneten Steuer- bzw. Regeleinrichtung einstellen, da die Temperaturregelung unmittelbar vom Regler selbst vorgenommen wird. Hierbei kann ausgenützt werden, dass der Regler zum Zwecke seiner Kühlung mittelbar oder unmittelbar mit der Kühlflüssigkeit in thermischem Kontakt steht. Insbesondere kann daher der Temperatursensor mit dem Regler eine Einheit bilden, d.h. in diesen integriert bzw. an diesem befestigt sein, so dass für die Temperaturregelung des Gebläsemotors nur eine einzige Baugruppe benötigt wird, was den Verkabelungsaufwand weiter reduziert.

Der Kühlmittelkreislauf kann somit als autarke Einheit zur Regelung der Temperatur der Kühlflüssigkeit eingesetzt werden. Lediglich die Soll-Temperatur der Kühlflüssigkeit bzw. des zu kühlenden Verbrennungsmotors wird gegebenenfalls noch von einem externen Steuergerät vorgegeben.

In einer bevorzugten Ausführungsform ist der Regler als (analoger) Linearregler ausgebildet. Das Vorsehen eines Linearreglers erlaubt bei einem Kraftfahrzeug mit einem stufenlos regelbaren Gebläsemotor dessen Regelung mit guter elektromagnetischer Verträglichkeit bei geringen Kosten. Durch die stufenlose Regelbarkeit ergibt sich zunächst eine minimale Geräuschentwicklung bei minimaler Belastung der Batterie. Gegenüber einer Regelung mit Relais ergibt sich eine größere Zuverlässigkeit durch weniger elektrische Verbindungen, weniger Kabeln und durch das Vorhandensein eines Überhitzungsschutzes weniger Ausfälle bei geringerer Brandgefahr. Auch führt der Einsatz eines Linearreglers anstelle von Relais zu einem etwa um 50 % reduzierten Gewicht bei einem mindestens 80 % geringeren Platzbedarf bei weniger als der Hälfte des Preises. Weiterhin fallen die Montagekosten geringer aus und ist eine Diagnose im Fehlerfall realisierbar.

Gegenüber PWM-Reglern hat der Linearregler eine deutlich bessere elektromagnetische Verträglichkeit, da Erstere nachteiligerweise mit 20 kHz getaktet sind. Der PWM-Regler erfordert daher umfangreiche Maßnahmen zur Gewährleistung der elektromagnetischen Verträglichkeit, die den PWM-Regler zu einer Komponente macht, die heutzutage ca. dreimal so teuer ist wie ein Linearregler. Die Lösung erlaubt erstmals eine stufenlose Regelung des Motorgebläses bei Klein- und Mittelklassefahrzeugen zu akzeptablen Preisen, erfordert jedoch im Gegenzug einen Eingriff in das komplexe Kühlsystem des Verbrennungsmotors durch Abführen der Verlustleistung des Linearreglers an den Wasserkreislauf.

In einer Ausführungsform steht der Regler in thermischen Kontakt mit einer Kühlmittelleitung des Kühlmittelkreislaufs. Dies ermöglicht es, beim Design des Fahrzeugs eine Position des Reglers dicht am Gebläsemotor zu wählen, um darüber den Verkabelungsaufwand zu verringern.

In einer weiteren Ausführungsform hat die Kühlmittelleitung eine Ausnehmung, in die der Regler oder ein dem Regler zugeordneter Kühlblock teilweise eingelassen ist. Die Kühlmittelleitung besteht beispielsweise aus Aluminiumdruckguss, in dessen Ausnehmung der Regler oder sein Kühlblock eingelassen und entsprechend abgedichtet sind. Damit wird der Regler thermisch an die Kühlflüssigkeit des Kühlmittelkreislaufs angekoppelt, was effizienter ist als eine Kühlung über das Medium Luft. Der Temperatursensor steht hierbei entweder unmittelbar mit der Kühlflüssigkeit in Kontakt oder ist zur Messung der Temperatur des Kühlblocks ausgebildet, aus welcher der Regler die Temperatur der Kühlflüssigkeit ermittelt.

In einer weiteren Ausführungsform steht der Regler in thermischen Kontakt mit einem Kühler, der dem Kühlmittelkreislauf zugeordnet ist und der Kühlflüssigkeit beinhaltet. Der Regler kann in diesem Fall direkt auf dem (Wasser-)Kühler aufliegen, wobei der Temperatursensor die Temperatur des Kühlergehäuses misst, aus welcher der Regler wiederum die Temperatur des Kühlmittels bestimmt. Es versteht sich, dass der Regler hierbei in der Nähe des Kühlmitteleintritts der Kühlflüssigkeit in den Kühler angeordnet sein kann, um die Temperatur der vom Verbrennungsmotor erwärmten Kühlflüssigkeit zu ermitteln bzw. auf eine Soll-Temperatur zu regeln, oder an einem Kühlmittelauslass, um die Temperatur der vom Kühler abgekühlten Kühlflüssigkeit zu erfassen und zu regeln.

Ein weiterer Aspekt der Erfindung betrifft ein Kraftfahrzeug mit einem Kühlmittelkreislauf wie oben beschrieben zum Kühlen seines Verbrennungsmotors. Wie bereits dargestellt, kann bei einem solchen Kraftfahrzeug der Verkabelungsaufwand reduziert werden.

Ein Aspekt der Erfindung betrifft eine Kühlmittelleitung für einen Kühlmittelkreislauf eines Kraftfahrzeugs, die einen Regler, insbesondere einen Linearregler, mit einem Temperatursensor zur Bestimmung der Temperatur einer die Kühlmittelleitung im Betrieb durchströmenden Kühlflüssigkeit aufweist. Hierdurch kann, wie oben erwähnt, der Abstand zwischen Regler und Gebläsemotor und damit die Kabellänge einer Steuerleitung vom Regler zum Gebläsemotor gering gehalten werden.

Bei einer Ausführungsform weist die Kühlmittelleitung eine Ausnehmung auf, in die der Regler oder ein dem Regler zugeordneter Kühlblock teilweise eingelassen ist, so dass der Regler auf besonders günstige Weise thermisch an die Kühlflüssigkeit des Wasserkreislaufs angekoppelt wird.

Ein weiterer Aspekt der Erfindung betrifft einen Kühler für einen Kühlmittelkreislauf eines Kraftfahrzeugs, der einen lösbar mit ihm verbundenen Regler, insbesondere einen Linearregler, mit einem Temperatursensor zur Bestimmung der Temperatur einer den Kühler im Betrieb durchströmenden Kühlflüssigkeit aufweist. Der (Wasser-)Kühler kann insofern vorbereitet sein, dass der Regler in den Kühler eingelassen oder über eine Clip-Verbindung mit diesem befestigt wird. Der Regler kann auf einen der seitlichen Kühlmittelendtanks des Kühlers montiert werden. Wegen der niedrigeren Temperaturen des Kühlmittels wird hierbei bevorzugt der kühlmittelaustrittsseitige Endtank gewählt. Durch eine kombinierte Kühler/Regler wird die Montage der Komponenten im Motorraum einfacher, wird Montagezeit eingespart, lassen sich die Komponenten kompakter anordnen und es ergibt sich dadurch eine größere Freiheit bei der Entwicklung eines neuen Fahrzeugs.

Ein weiterer Aspekt der Erfindung betrifft ein CRFM-Modul mit einem Gebläsemotor und einem Kühler wie oben beschrieben. Auch hier ergibt sich durch die vorgenommene Funktionsintegration ein geringerer Platzbedarf für die Komponenten im Motorraum mit einer größeren Freiheit bei der Entwicklung eines neuen Fahrzeugs.

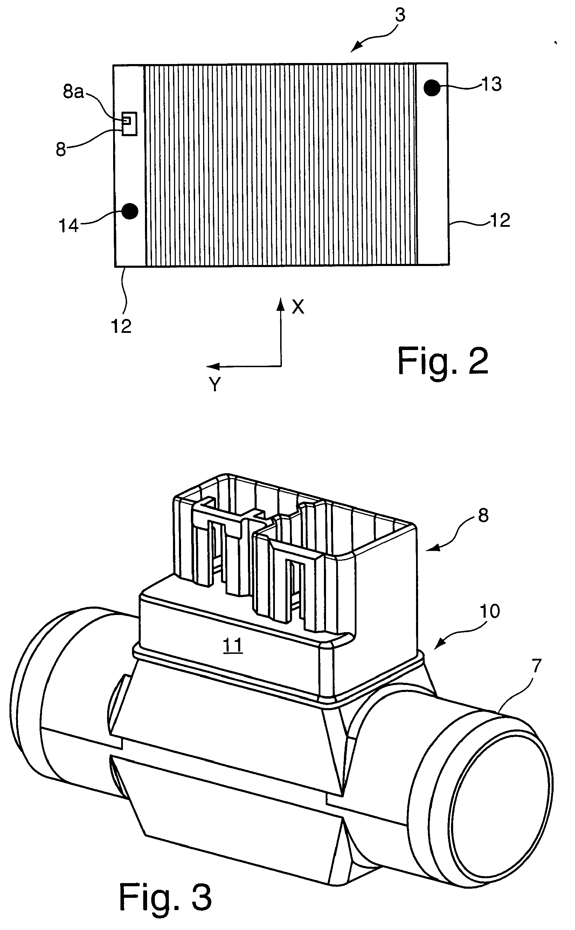

Ausführungsbeispiele der Erfindung sind in den schematischen Zeichnungen dargestellt und werden in der nachfolgenden Beschreibung erläutert. Es zeigt:

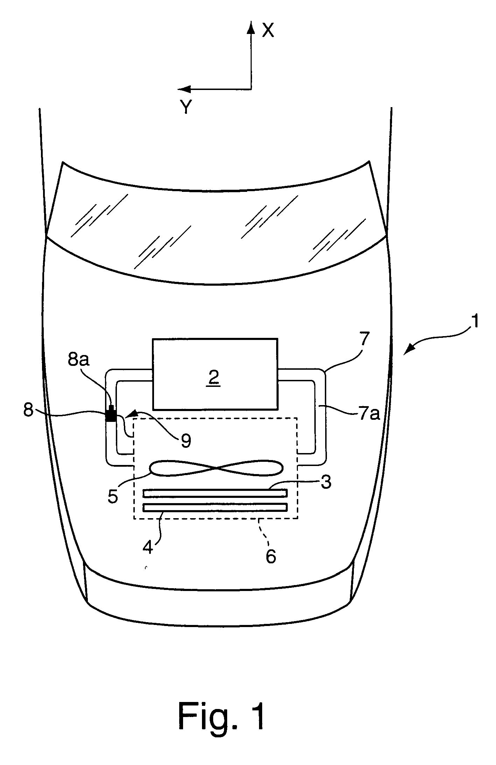

- **Fig. 1**: ein Kraftfahrzeug in der Draufsicht,
- .**Fig. 2**: einen Wasser-Kühler in der Seitenansicht, und
- .**Fig. 3**: eine Kühlmittelleitung für den Kühlmittelkreislauf mit einge- lassenem Linearregler.

Bei den Figuren, die allgemein mit gleichen Bezugszeichen gleiche Gegenstände bezeichnen, zeigt Figur 1 ein Kraftfahrzeug **1** in der Draufsicht. Das Kraftfahrzeug **1** besitzt einen Verbrennungsmotor **2**, vor dem ein WasserKühler **3** und ein Klimakondensator **4** angeordnet sind. Für den Kühlernachlauf nach einem Abstellen des Kraftfahrzeugs 1 ist ein Gebläsemotor **5** vorgesehen.

Wasserkühler 3, Klimakondensator 4 und Gebläsemotor 5 können einzelne Komponenten für die separaten Kühlkreisläufe sein, oder aber Bestandteile eines CRFM-Moduls (englisch: condenser radiator fan module) **6** sein, wie es die gestrichelte Linie andeutet. Das CRFM-Modul 6 kühlt den Verbrennungsmotor 2 auf bekannte Weise über eine Kühlmittelleitung **7** mit Wasser als Kühlflüssigkeit **7a**.

In die Kühlmittelleitung 7 ist ein Regler **8** eingelassen, der als Linearregler ausgebildet ist. Der Regler 8 ist über eine elektrische Leitung **9** mit dem CRFM-Modul 6 verbunden und regelt dessen Lüfter bzw. Gebläsemotor 5 stufenlos. Hierdurch wird mit geringen Kosten und EMV-verträglich das Lüftergeräusch beim Nachlauf und auch die Belastung der Batterie (nicht gezeigt) auf ein Minimum reduziert. Dies gelingt trotz der mitunter hohen Temperaturen im Motorraum mit dem Regler 8, der von der Kühlflüssigkeit im Wasserkreislauf ausreichend gekühlt werden kann.

Der Regler 8 weist weiterhin einen Temperatursensor **8a** auf, der mit der Kühlflüssigkeit 7a unmittelbar in thermischem Kontakt steht. Das von dem Temperatursensor 8a gelieferte Signal, welches der Ist-Temperatur der Kühlflüssigkeit 7a entspricht, wird von dem Regler 8 ausgewertet und dieser steuert den Gebläsemotor 5 über die Leitung 9 derart an, dass sich eine gewünschte Soll-Temperatur der Kühlflüssigkeit 7a einstellt. Der Kühlmittelkreislauf des Kraftfahrzeugs 1 stellt somit einen geschlossenen Regelkreis dar, welcher ohne ein externes Steuergerät die Temperatur der Kühlflüssigkeit 7a und damit des Verbrennungsmotors 2 regeln kann. Lediglich die Soll-Temperatur der Kühlflüssigkeit kann ggf. von einem externen Steuergerät vorgegeben werden.

Figur 2 zeigt den Wasser-Kühler 3, bei dem auf einen Endtank **12** der Linearregler 8 festgeschraubt ist. Da der Kühlmitteleintritt **13** in Figur 2 rechts und der Kühlmittelauslass **14** links ist, wird hierzu wegen der niedrigeren Temperaturen der kühlmittelaustrittsseitige Endtank 12 gewählt. Der Wasser-Kühler 3 besitzt eine auf die Abmessungen des Linearreglers 8 abgestimmte Vertiefung (nicht gezeigt), die den Linearregler teilweise aufnimmt. Der Wasserkühler 3 kann Teil des CRFM-Moduls 6 der Figur 1 sein. Der Regler 8 weist einen Temperatursensor 8a auf, welcher mit dem Endtank 12 in thermischem Kontakt steht und über die Temperatur des in thermischem Kontakt mit der Kühlflüssigkeit stehenden Endtanks 12 indirekt die Temperatur der Kühlflüssigkeit erfasst.

Figur 3 zeigt die Kühlmittelleitung 7 für den Kühlmittelkreislauf für den Verbrennungsmotor 2. Diese besitzt eine Ausnehmung **10**, in die ein Kühlblock **11** des Linearreglers 8 eingelassen ist, damit er direkt von Kühlflüssigkeit des Kühlmittelkreislaufs umströmt wird. Der Linearregler 8 weist einen (nicht gezeigten) Temperatursensor auf, der mit dem Kühlblock 11 in thermischer Verbindung steht, so dass der Regler 8 die Temperatur der Kühlflüssigkeit in der Kühlmittelleitung 7 anhand der Temperatur des Kühlblocks 11 erfassen kann.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen. Insbesondere kann die Erfindung bei allen technischen Einrichtungen eingesetzt werden, welche zur Regelung der Temperatur der Kühlflüssigkeit eines Kühlmittelkreislaufs einen Gebläsemotor aufweisen.

## Patentansprüche

1. Kühlmittelkreislauf (5, 6, 7, 7a, 8, 8a) bevorzugt für das Kühlen eines Antriebs oder Motors (2) eines Kraftfahrzeugs (1), insbesondere eines Pkws, umfassend: einen Regler (8), der zur Regelung der Temperatur einer Kühlflüssigkeit (7a) einen elektrisch betriebenen Gebläsemotor (5) ansteuert, **dadurch gekennzeichnet, dass** der Regler (8) für seine Kühlung in thermischem Kontakt mit der Kühlflüssigkeit (7a) steht, und dass der Regler (8) ausgebildet ist, über einen bevorzugt am Regler (8) vorgesehenen Temperatursensor (8a) die Temperatur der Kühlflüssigkeit (7a) zu erfassen.

2. Kühlmittelkreislauf nach Anspruch 1, bei dem der Regler (8) ein Linearregler ist.

3. Kühlmittelkreislauf nach Anspruch 1 oder 2, bei dem der Regler (8) in thermischem Kontakt mit einer Kühlmittelleitung (7) des Kühlmittelkreislaufs steht.

4. Kühlmittelkreislauf nach Anspruch 3, bei dem die Kühlmittelleitung (7) eine Ausnehmung (10) hat, in die der Regler (8) oder ein dem Regler (8) zugeordneter Kühlblock (11) teilweise eingelassen ist.

5. Kühlmittelkreislauf nach einem der vorhergehenden Ansprüche, bei dem der Regler (8) in thermischem Kontakt mit einem Kühler (3) zur Kühlung der Kühlflüssigkeit (7a) steht.

6. Kraftfahrzeug (1) mit einem Kühlmittelkreislauf (5, 6, 7, 7a, 8, 8a) nach einem der vorhergehenden Ansprüche zum Kühlen seines Verbrennungsmotors (2).

7. Kühlmittelleitung (7) für einen Kühlmittelkreislauf (5, 6, 7, 7a, 8, 8a) eines Kraftfahrzeugs (1), die einen Regler (8), insbesondere einen Linearregler, mit einem Temperatursensor (8a) zur Bestimmung der Temperatur einer die Kühlmittelleitung (3) im Betrieb durchströmenden Kühlflüssigkeit (7a) aufweist.

8. Kühlmittelleitung nach Anspruch 7, die eine Ausnehmung (10) aufweist, in die der Regler (8) oder ein dem Regler (8) zugeordneter Kühlblock (11) teilweise eingelassen ist.

9. Kühler (3) für einen Kühlmittelkreislauf (5, 6, 7, 7a, 8, 8a) eines Kraftfahrzeugs (1), der einen lösbar mit ihm verbundenen Regler (8), insbesondere einen Linearregler, mit einem Temperatursensor (8a) zur Bestimmung der Temperatur einer den Kühler (3) im Betrieb durchströmenden Kühlflüssigkeit (7a) aufweist.

10. CRFM-Modul (6), umfassend einen Gebläsemotor (5) und einen Kühler (3) nach Anspruch 9.
